# EUROPÄISCHE PATENTSCHRIFT

(11) **EP 4 218 127 B1**
(45) Veröffentlichungstag und Bekanntmachung des Hinweises auf die Patenterteilung: **30.10.2024**
(21) Anmeldenummer: 21794707.6
(22) Anmeldetag: 20.09.2021
(51) Int. Cl.: H02M 7/483, H02M 7/00, H02M 1/32, H02M 1/34

(54) **LEISTUNGSBAUGRUPPE FÜR EINEN MITTEL- ODER HOCHSPANNUNGSUMRICHTER ODER FÜR EINEN LEISTUNGSELEKTRONISCHEN UMRICHTER EINES ELEKTROFAHRZEUGES**
POWER ASSEMBLY FOR A MEDIUM-VOLTAGE OR HIGH-VOLTAGE CONVERTER OR FOR A POWER ELECTRONICS CONVERTER OF AN ELECTRIC VEHICLE
ENSEMBLE DE PUISSANCE POUR UN CONVERTISSEUR MOYENNE TENSION OU HAUTE TENSION OU POUR UN CONVERTISSEUR ÉLECTRONIQUE DE PUISSANCE D'UN VÉHICULE ÉLECTRIQUE

(30) Priorität: 24.09.2020 AT 508102020
(43) Veröffentlichungstag der Anmeldung: 02.08.2023
(73) Patentinhaber: Miba Energy Holding GmbH, 4663 Laakirchen (AT)
(72) Erfinder: NAGELMÜLLER, Martin, 4663 Laakirchen (AT); RATZI, Raimund, 4663 Laakirchen (AT)
(74) Vertreter: Burger, Hannes
(86) Internationale Anmeldenummer: PCT/AT2021/060335
(87) Internationale Veröffentlichungsnummer: WO 2022/061382

(56) Entgegenhaltungen:
- WO-A1-2018/149493
- WO-A1-2019/222779
- WO-A1-2019/222784
- US-A1- 2018 342 945

## Beschreibung

Die Erfindung betrifft eine Leistungsbaugruppe für einen vorzugsweise modularen Mittel- oder Hochspannungsumrichter oder für einen leistungselektronischen Umrichter eines Elektrofahrzeuges, sowie einen Mittel- oder Hochspannungsumrichter, welcher eine Mehrzahl in Serie geschalteter Leistungsbaugruppen aufweist, wie dies in den Ansprüchen angegeben ist.

Modulare Multilevel Umrichter, im Englischen als "Modular Mulitlevel-Converter" oder kurz als MMC bezeichnet, sind modular aus zahlreichen Umrichterzellen aufgebaut. Insbesondere können zwei bis mehrere Hundert solcher Umrichterzellen, welche jeweils identisch aufgebaut sind und häufig als Submodule bezeichnet werden, elektrisch miteinander verschaltetet sein. Allein schon aufgrund statistischer Ausfallraten sind Defekte bei einzelnen solcher Submodule während der Betriebszeit des Umrichters unvermeidlich. Bei modernen MMC wird trotz solcher Submodul-Defekte ein nahtloser Weiterbetrieb des MMC angestrebt, da MMC-Anlagen häufig wichtige Bestandteile von Energieversorgungsnetzen bzw. Infrastruktursystemen bilden. Defekte Submodule werden normalerweise turnusmäßig in gewissen Revisionszyklen ausgetauscht anstatt sofort beim Auftreten eines Defektes an einem Submodul. Im MMC kann hierfür eine gewisse Anzahl an Reserve- bzw. Ersatz-Submodulen verbaut sein. Zum genannten Weiterbetrieb ist zunächst das sofortige Überbrücken, häufig auch "bypassen" bezeichnet, solcher defekter Submodule notwendig, was aber nur ein Teilaspekt von hochverfügbaren MMC-Anlagen ist.

Ein solches Submodul umfasst im Wesentlichen einen elektrischen Kondensator mit hoher Speicherkapazität und eine Brückenschaltung mit Halbleiter-Schaltelementen, meistens IG-BTs welche in Halbbrücken- oder Vollbrückenschaltung angeordnet sind.

Ein besonders schädlicher, trotz Sicherheitsvorkehrungen nicht gänzlich auszuschließender Defektfall kann ein Brückenkurzschluss durch die Halbleiter-Schaltelemente sein. Dabei wird der Kondensator von den Halbleiter-Schaltelementen der Brückenschaltung unbeabsichtigt kurzgeschlossen. Die Energie des Kondensators entlädt sich dadurch schlagartig in die Brückenschaltung. Die Halbleiter-Schaltelemente halten dabei der enormen Belastung durch den Kurzschlussstrom nicht stand, was zu deren Explosion und infolgedessen zu einer erheblichen Beschädigung in der Umgebung der Halbleiter-Schaltelemente führt. Es können dabei Plasmen bzw. Lichtbögen, Metalldämpfe aufgrund verdampfter Teile von Stromschienen, und hohe Druckwellen auftreten, die ein äußeres Gehäuse des Submoduls zerstören können. Aus einem derart defekten Submodul können Lichtbögen, Metalldämpfe und Druckwellen austreten und benachbarte Submodule in Mitleidenschaft ziehen, was weitere Beschädigungen an eigentlich intakten Submodulen nach sich ziehen kann und letztlich zu einem fatalen Gesamtausfall des MMC führen kann. Ein solcher "Domino-Effekt" ist somit auf jeden Fall zu vermeiden. Hierzu werden zumeist aufwendige Gegenmaßnahmen mechanischer Art getroffen. Solche Maßnahmen steigern Komplexität, Größe und Gewicht und treiben nicht zuletzt die Kosten der Submodule und somit des gesamten Umrichters stark in die Höhe. Insbesondere zählt es bei MMC-Submodulen zum üblichen Stand der Technik, dass Explosionsenergien mit mechanischen Mitteln eingedämmt werden. Beispielsweise werden die Halbleiter-Schaltelemente in einem druckimpulsfesten und entsprechend dickwandigen, faserverstärkten Kunststoff-Gehäuse mechanisch gekapselt. In zahlreichen Veröffentlichungen wie zum Beispiel DE102016202600A1 und WO2017211405A1 werden Details hierzu ausgeführt.

Weiters wurde im Stand der Technik vorgeschlagen, Kurzschlussenergien elektrisch mittels aktiv angesteuerter Kurzschlussschalter abzuführen oder darin zu absorbieren, wie zum Beispiel gemäß WO2013044961A1, WO2015090367A1, WO2010102666A1 oder DE102013217672B3. Diese bekannten Maßnahmen haben den Nachteil von zusätzlichem baulichen Aufwand bzw. den Nachteil einer notwendigen, aktiven Ansteuerung mit ausreichender Schnelligkeit. Das verursacht Zusatzkosten und reduziert die Zuverlässigkeit, da Zusatzelemente per se die statistische Ausfallrate wieder erhöhen. Zudem können solche Elemente in der Praxis oft nur sehr schwierig schnell genug angesteuert und aktiv werden, um den Kurzschlussstromimpuls hinreichend zu begrenzen, und so auf umfangreiche mechanische Schutzmaßnahmen möglichst verzichten zu können.

Die WO2018149493A1 beschreibt ein Umrichtermodul für einen Spannungszwischenkreisumrichter mit einer Leistungshalbleiterschaltung mit wenigstens zwei Leistungshalbleiterschaltern, einem Energiespeicher in einer Parallelschaltung zu der Leistungshalbleiterschaltung sowie einer Schutzvorrichtung umfassend einen steuerbaren Schutz-Halbleiter, der in einer Parallelschaltung zum Energiespeicher angeordnet ist. Die Schutzvorrichtung umfasst ferner einen Strombegrenzer zum Begrenzen von Stoßströmen, der in Reihe zum Energiespeicher angeordnet ist. Gemäß einer Ausführungsform umfasst der Strombegrenzer eine Primärwicklung, die in Reihe zum Energiespeicher angeordnet ist, sowie eine Sekundärwicklung, wobei die Sekundärwicklung und die Primärwicklung magnetisch gekoppelt sind und die Sekundärwicklung widerstandsbehaftet kurzgeschlossen ist. Der Strombegrenzer entspricht dabei einem sekundärseitig kurzgeschlossenen Transformator.

Die Patentschrift US2018/0342945 A1 offenbart eine Entladungsschaltung zum Entladen eines Zwischenkreiskondensators, wobei die Entladungsenergie durch die in einem Kühlkörper induzierten Wirbelströme dissipiert wird. Der Kühlkörper kan dabei Teil eines Gehäuses sein.

Aus Effizienzgründen ist in einem Submodul die Anbindung des Kondensators an die Halbleiter-Schaltelemente möglichst niederimpedant ausgeführt, also mit möglichst geringer Induktivität und möglichst geringem ohmschen Widerstand umgesetzt. Im Kurzschlussfall werden damit aber enorme Kurzschluss-Ströme ermöglicht. Beispielsweise können bei einer Kondensator-Kapazität von 6,5 mF und einer Kondensator-Spannung von 2,5 kV die auftretenden Kurzschluss-Ströme kurzzeitig eine Größenordnung von 2 MA (Millionen Ampere) haben. Zum Schutz bei solchen Kurzschlussfällen können bekannte elektrische Sicherungselemente nicht angewendet werden, weil diese eine im Nennbetrieb untragbare Vergrößerung der Impedanz der Betriebsstrompfade zwischen dem Kondensator und den Halbleiter-Schaltelementen bilden würden. Außerdem stellen Sicherungen per se eine nicht vernachlässigbare Fehlerquelle dar. Aktive Trennschalter, egal ob elektronischer oder mechanischer Art, sind allein aufgrund der benötigen Ansteuerung und der erforderlichen, extrem kurzen Reaktionszeit von nur wenigen Mikrosekunden kaum brauchbar.

Ideal wäre ein zuverlässiger, günstig realisierbarer, stets vorhandener Mechanismus, der im Regel- bzw. Normalbetriebsfall der Leistungsbaugruppe bzw. des MMC nicht aktiv ist, im oben genannten Defektfall aber ohne jegliches äußeres Eingreifen bzw. Ansteuern selbsttätig aktiv wird. Dies ist mit nachfolgend beschriebener Lösung gelungen.

Aufgabe der vorliegenden Erfindung war es, die Nachteile des Standes der Technik zu überwinden und technische Maßnahmen zur Verfügung zu stellen, mit denen die Folgen von fehlerhaften Submodulen bzw. von ungewollten Kurzschlüssen in Leistungsbaugruppen mit geringem Aufwand möglichst gering gehalten werden können.

Diese Aufgabe wird durch eine Leistungsbaugruppe und durch einen Mittel- oder Hochspannungsumrichter gemäß den Ansprüchen gelöst.

Die beanspruchte Erfindung geht einen anderen Weg zur Eindämmung der Folgen von grundsätzlich unvermeidbaren Kurzschluss- und Schadensfällen in Submodulen bzw. Leistungsbaugruppen für modulare Mittel- oder Hochspannungsumrichter bzw. für leistungsstarke Umrichter im elektrischen Antriebsstrang von Elektro- oder Hybridfahrzeugen. Eine erfindungsgemäße Leistungsbaugruppe für einen Mittel- oder Hochspannungsumrichter, vorzugsweise für einen Modularen Multilevel Umrichter, oder für einen leistungselektronischen Umrichter eines Elektrofahrzeuges umfasst die gesamten Merkmale des Anspruchs 1. Die zumindest eine Energiespeicherbaugruppe ist vorzugsweise eine Kondensatorbaugruppe oder eine Batterie- bzw. Akku-Baugruppe.

Die Stromschiene, die im elektrischen Pfad zwischen der zumindest einen Energiespeicherbaugruppe und der zumindest einen Leistungshalbleiterbaugruppe angeordnet ist, bildet einen Leiter zur möglichst verlustarmen bzw. möglichst verlustfreien Übertragung von elektrischer Energie zwischen der Energiespeicherbaugruppe und der Leistungshalbleiterbaugruppe.

Bei dieser Leistungsbaugruppe ist eine Kurzschlussstromdämpfung ausgebildet, indem ein Abstand und/oder eine Ausrichtung und/oder eine flächenbezogene Überdeckung zwischen dem zumindest einen elektrischen Leiter, welcher eine erste und eine zweite Stromschiene aufweist, und dem zumindest einen Gehäuseteil derart ausgebildet ist, dass bei einem Auftreten eines kurzschlussartigen bzw. kurzschlussbedingten Stromanstieges in dem zumindest einen elektrischen Leiter eine induktive Kopplung zwischen dem zumindest einen elektrischen Leiter und dem zumindest einen Gehäuseteil aufbaubar ist bzw. aufgebaut ist. Diese induktive Kopplung ist derart ausgeführt, dass im Kurzschlussfall zumindest ein Bruchteil, insbesondere zumindest 10%, der elektrischen Energie aus der Energiespeicherbaugruppe in das zumindest eine Gehäuseteil übertragbar bzw. einkoppelbar ist oder die Amplitude des Kurzschlussstromes um mehr 10% gedämpft ist im Vergleich zu einer Ausführung ohne der Kurzschlussstromdämpfung.

Eine vorteilhafte Weiterbildung der Kurzschlussstromdämpfung ist gegeben, wenn die induktive Kopplung derart ausgeführt ist, dass mehr als 20%, vorzugsweise mehr als 40%, der elektrischen Energie der Energiespeicherbaugruppe in das zumindest eine Gehäuseteil einkoppelbar ist, oder eine maximale Höhe bzw. Amplitude eines Kurzschlussstromes in dem zumindest einen elektrischen Leiter im Vergleich zu einer Ausführung ohne der Kurzschlussstromdämpfung um mehr als 20%, vorzugsweise um mehr als 50% gedämpft bzw. reduziert ist. Derartige Dämpfungsraten sind sich vor allem bei Kondensatorbaugruppen als Energiespeicherbaugruppe zweckmäßig. Dadurch kann das Ausmaß der kurzschlussbedingten Zerstörungsenergie innerhalb der Leistungsbaugruppe gering gehalten werden und trotzdem ein relativ kompakter Aufbau der Leistungsbaugruppe erreicht werden.

Unter der räumlichen Ausrichtung zwischen dem zumindest einen elektrischen Leiter und dem zumindest einen Gehäuseteil sind die jeweiligen Orientierungen bzw. der Verlauf zueinander, beispielsweise das Ausmaß eines Überschneidungsverhältnisses bzw. die Streckenlänge einer gegenseitigen Parallelführung und somit das Ausmaß der induktiven bzw. elektromagnetischen Kopplung zu verstehen. Unter der flächenbezogenen Überdeckung sind der Überdeckungsgrad oder das Ausmaß einer gegenseitigen Überdeckung in Bezug auf eine vordefinierte Ebene, beispielsweise in Bezug auf eine Horizontalebene, zu verstehen.

Durch die erfindungsgemäßen Maßnahmen ist ein zuverlässiger, relativ günstig realisierbarer und stets wirkungsbereiter Dämpfungsmechanismus geschaffen, der im Normalbetriebszustand der Leistungsbaugruppe bzw. des modularen Umrichters nicht aktiv ist. In einem Defektfall der Leistungsbaugruppe bzw. in einem fehlerhaften Ansteuerungszustand gegenüber den Halbleiter-Schaltelementen, welche Situationen einen Kurzschluss des Kondensators bzw. der Akku-Baugruppe hervorrufen, wird die erfindungsgemäße Kurzschlussstromdämpfung automatisch aktiv. Insbesondere wird die angegebene Kurzschlussstromdämpfung ohne jegliches Eingreifen bzw. ohne Ansteuern von Komponenten selbsttätig aktiv und bedämpft den auftretenden Kurzschlussstrom aus dem Kondensator oder aus einer Batterie bzw. aus dem Spannungszwischenkreis. Insbesondere wird ein vorbestimmter Anteil der plötzlich auftretenden Kurzschlussenergie gezielt dorthin abgeführt, wo die Kurzschlussenergie keine kapitalen Schäden verursachen kann, nämlich durch eine vordefinierte induktive Kopplung zumindest teilweise in den zumindest einen Gehäuseteil der Leistungsbaugruppe übergeleitet.

Das zumindest eine Gehäuseteil ist vorzugsweise aus Metall gebildet oder es enthält zumindest Abschnitte aus Metall, und es weist durch geeignete Auswahl des metallischen Materials einen definierten, ohmschen Widerstand auf.

Im Stand der Technik werden bei Umrichtern magnetische Kopplungen und Wirbelstromeffekte in Gehäusen grundsätzlich vermieden, beispielsweise gemäß der EP3128665B1, indem durch schlitzförmige Durchbrüche im Gehäuse oder durch nichtleitende Gehäuseeinlagen magnetische Kopplungseffekte minimiert werden.

Zweckmäßig kann es sein, wenn die induktive Kopplung zwischen dem zumindest einen elektrischen Leiter und dem zumindest einen Gehäuseteil derart dimensioniert ist, dass beim Auftreten eines Kurzschlusses innerhalb der Leistungsbaugruppe, insbesondere in einem der Leistungshalbleiterschalter der Leistungshalbleiterbaugruppe, maximal 60% der in der Energiespeicherbaugruppe speicherbaren elektrischen Energie in das zumindest eine Gehäuseteil eingekoppelt wird respektive auf jene metallischen Teile übertragen wird, welche den zumindest einen elektrischen Leiter unmittelbar umgeben, insbesondere auf die metallische Kühlplatte und den zumindest einen Gehäuseteil übergeleitet wird. Dadurch ist ein günstiges Verhältnis zwischen der Wirksamkeit der Kurzschlussstromdämpfung und einem möglichst verlustarmen Betrieb der Leistungsbaugruppe während dem Normalbetriebszustand der Leistungsbaugruppe geschaffen.

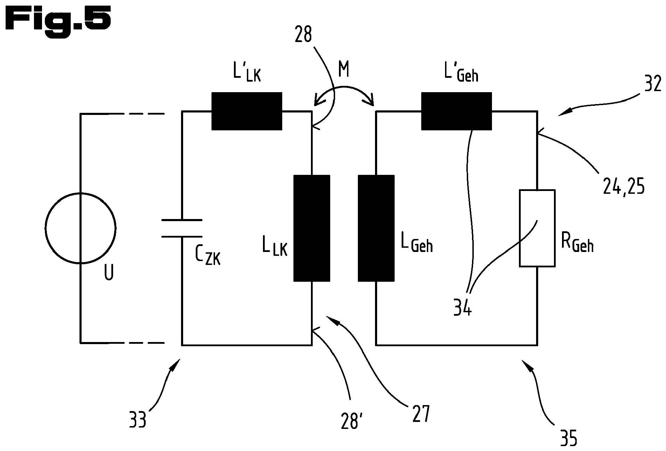

Die erfindungsgemäßen Maßnahmen sind primär in Zusammenhang mit Leistungsbaugruppen für Mittel- oder Hochspannungsrumrichter beschrieben. Die Erfindung ist jedoch allgemein für leistungselektronische Umrichter mit Spannungszwischenkreis anwendbar, was in Fig. 5 durch die zum Zwischenkreiskondensator C_{ZK} alternativ dargestellte Spannungsquelle U angedeutet ist. Insbesondere können die erfindungsgemäßen Maßnahmen auch bei leistungsstarken, batterie- bzw. akkugespeisten Umrichtern für den Elektroantrieb von Hybrid- oder Elektrofahrzeugen vorteilhaft eingesetzt werden.

Die erfindungsgemäßen Maßnahmen sind vor allem dann zweckmäßig anwendbar, wenn ein Faktor zwischen einem Nennbetriebsstrom des Umrichters und einem gegebenenfalls auftretenden Kurzschlussstrom aus einem Kondensator bzw. einem Batteriemodul mehr als 100 beträgt oder/und wenn die elektromagnetische Busbar-Symmetrie im Kurzschlussfall gestört oder aufgehoben wird.

Die Energiespeicherbaugruppe der gattungsgemäßen Leistungsbaugruppe kann eine elektrische Kapazität aufweisen, welche bei einem Versagen oder Fehler der zumindest einen Leistungshalbleiterbaugruppe und ohne Vorhandensein oder ohne Wirkung der Kurzschlussstromdämpfung in dem zumindest einen elektrischen Leiter, welcher zumindest eine elektrische Leiter zu den Halbleiter-Schaltelementen der Leistungshalbleiterbaugruppe führt, insbesondere in der zumindest einen Stromschiene, einen Kurzschlussstrom verursacht, welcher mehr als das 100-fache, insbesondere mehr als das 500-fache eines Normalbetriebsstromes in dem zumindest einen elektrischen Leiter beträgt. Je nach Kapazität des Kondensators bzw. Energie des Spannungszwischenkreises kann der Kurzschlussstrom kurzzeitig auch mehr als das 1000-fache des Regel- bzw. Normalbetriebsstromes der Leistungsbaugruppe betragen. Dadurch können leistungsstarke Umrichter mit niedriger Impedanz im Arbeits- bzw. Leistungsstromkreis und somit möglichst energieeffiziente Umrichter geschaffen werden. Zudem ist dadurch eine klare Differenzierung zwischen dem Normalbetriebszustand und einem Kurzschlusszustand in der Leistungsbaugruppe gegeben, was die Dimensionierung bzw. das automatische Inaktivsein und Wirksamwerden der Kurzschlussstromdämpfung erleichtert.

Entsprechend einer zweckmäßigen Ausführungsform ist der Abstand und/oder die Ausrichtung und/oder die flächenbezogene Überdeckung zwischen dem zumindest einen elektrischen Leiter, vorzugsweise gebildet durch eine Stromschiene, und dem zumindest einen Gehäuseteil derart ausgebildet, dass im Normal- bzw. Standardbetrieb der Leistungsbaugruppe, insbesondere ohne Auftreten eines fehlerbedingten Kurzschlussstromes, eine induktive Einkopplung der elektrischen Leistung aus der Energiespeicherbaugruppe in das zumindest eine Gehäuseteil weniger als 2 %, insbesondere weniger als 1 %, jener elektrischen Leistung beträgt, welche über den zumindest einen elektrischen Leiter an die Leistungshalbleiterbaugruppe übertragen wird. Dadurch wird die Energieeffizienz bzw. der Wirkungsgrad der Leistungsbaugruppe hoch gehalten. Insbesondere werden keine intolerablen Verluste durch den Dämpfungseffekt verursacht, weil die Entfernung und/oder Ausrichtung und/oder Überdeckung zwischen dem zumindest einen Gehäuseteil und der zumindest einen Stromschiene bzw. dem zumindest einen elektrischen Leiter entsprechend gewählt ist. Insbesondere kann die induktive Kopplung den jeweiligen Anforderungen an die Kurzschlussstromdämpfung einfach angepasst werden. Demnach ist auch eine gewisse Einstellbarkeit der Kopplung in Bezug auf ein Wirksamwerden ab einem bestimmtem Kurzschlussstrom gegeben.

Ferner kann vorgesehen sein, dass der zumindest eine Gehäuseteil mit der Kühlplatte mechanisch befestigbar ausgebildet ist. Insbesondere kann es zweckmäßig sein, wenn der zumindest eine Gehäuseteil mit der Kühlplatte elektrisch leitfähig verbunden ist, insbesondere über elektrisch leitfähige Kontaktflächen auf der elektrisch leitfähigen, vorzugsweise Aluminium aufweisenden, Kühlplatte abgestützt ist. Dadurch ist ein induktiv gekoppelter Gehäusestromkreis geschaffen, in welchen ein Teil der auftretenden Kurzschlussenergie induktiv eingekoppelt und dort in Wärmeenergie umgewandelt werden kann.

Zweckmäßig ist es auch, wenn der zumindest eine Gehäuseteil vorzugsweise haubenartig ausgebildet ist, oder deckelartig ausgebildet ist. Dadurch kann zusätzlich zur vorteilhaften Kurzschlussstromdämpfung auch eine mechanische Abschirmung von explosionsartigen Zerstörungen der Leistungshalbleiterbaugruppe erzielt werden. Die Folgen für die Umgebung, insbesondere negative Auswirkungen auf unmittelbar benachbarte Leistungsbaugruppen, können so gering bzw. vernachlässigbar gehalten werden.

Vorteilhaft kann es auch sein, wenn der zumindest eine erste Gehäuseteil an zumindest zwei einander gegenüberliegenden Endabschnitten, vorzugsweise an allen der Kühlplatte zugewandten Abstützflächen, mit der elektrisch leitfähigen Kühlplatte elektrisch leitfähig verbunden ist, sodass ein elektrisch leitfähiger Gehäusestromkreis bzw. Ableitungspfad umfassend die Kühlplatte und den zumindest einen ersten Gehäuseteil um den zumindest einen elektrischen Leiter und die Leistungshalbleiterbaugruppe herum aufgebaut ist. Dadurch ist ein gut definierter, elektromagnetisch gekoppelter Stromkreis bzw. ein elektrischer Sekundärkreis geschaffen, in welchem die in einem Kurzschlussfall auftretende Impulsenergie aus der Kondensator- bzw. Energiespeicherbaugruppe zumindest anteilig übertragen und dort in Verlustwärme umgewandelt wird. Von Vorteil ist weiters, dass dadurch das Ausmaß der elektromagnetischen Kopplung, welche für die angestrebte Wirkung der Kurzschlussstromdämpfung erforderlich ist, gut definiert und nachvollziehbar eingestellt werden kann.

Ferner kann vorgesehen sein, dass der zumindest eine erste Gehäuseteil in Kombination mit zumindest einem weiteren Gehäuseteil bei einem kurzschlussartigen bzw. kurzschlussbedingten Stromanstieg einen transformatorisch gekoppelten Gehäusestromkreis bzw. elektrischen Ableitungspfad um die Leitungshalbleiterbaugruppe und den zumindest einen elektrischen Leiter ausbildet. Bei dieser Ausführungsform kann die Kühlvorrichtung bzw. deren Kühlplatte in Zusammenhang mit der Kurzschlussstromdämpfung unbeteiligt oder relativ unbeteiligt sein. Der Sekundär-Strompfad für die Kurzschlussstromdämpfung ist hier überwiegend durch ein dosen- bzw. schachtelförmiges Gehäuse definiert, welches um die Kühlplatte und die Leistungshalbleiterbaugruppe herum aufgebaut ist.

Entsprechend einer zweckmäßigen Ausführungsform ist vorgesehen, dass das zumindest eine Gehäuseteil durch ein Material, beispielsweise Edelstahl, gebildet, welches einen höheren ohmschen Widerstand aufweist, als der ohmsche Widerstand des Materials der Kühlplatte, beispielsweise Aluminium oder eine Aluminiumlegierung, aufweist. Dadurch können gezielte ohmsche Widerstände in dem zumindest einen Gehäuseteil aufgebaut bzw. bereitgestellt werden. Dies ermöglicht eine definierte Umwandlung der transformatorisch bzw. induktiv in das zumindest eine Gehäuseteil übertragenen elektrischen Energie. Insbesondere wird dadurch die in dem Gehäuseteil induzierte elektrische Spannung und der resultierende elektrische Strom in dem zumindest einen Gehäuseteil definiert in Wärmeenergie umgewandelt.

Gemäß einer vorteilhaften Ausgestaltung sind der Abstand und/oder die Ausrichtung bzw. Orientierung und/oder die flächenbezogene Überdeckung zwischen dem zumindest einen elektrischen Leiter und dem zumindest einen Gehäuseteil derart gewählt, dass mittels induktiver Kopplung zwischen dem zumindest einen von einem Kurzschlussstrom durchflossenen elektrischen Leiter und dem zumindest einen Gehäuseteil in dem zumindest einen Gehäuseteil elektrische Wirbelströme induziert werden, die Energie aus der Energiespeicherbaugruppe mittels ohmscher Widerstände bzw. Verluste in dem zumindest einen Gehäuseteil in Wärme umwandeln. Auch mit derartigen Wirbelstromeffekten in dem zumindest einen Gehäuseteil kann eine wirksame Kurzschlussstromdämpfung erzielt werden.

Zweckmäßig kann es auch sein, wenn eine elektromagnetische Kopplung des zumindest einen mit Kurzschlussstrom beaufschlagten elektrischen Leiters gegenüber dem aus dem zumindest einen Gehäuseteil gebildeten Gehäusestromkreis bzw. Sekundärstromkreis derart gewählt und festgelegt ist, dass die Induktivität des Gehäusestromkreises transformatorisch in den Arbeits- bzw. Leistungsstromkreis bzw. Primärstromkreis transformiert wird, sodass eine Stromanstiegsgeschwindigkeit im Arbeits- bzw. Leistungsstromkreis bei einem fehlerbedingten, kurzschlussartigen Stromanstieg verringert wird. Dadurch wird ein weiterer vorteilhafter Effekt der elektromagnetischen Kopplung erzielt. Hierbei wird die Energie aus der Energiespeicherbaugruppe nicht bloß in Wärme umgewandelt, sondern eine höhere Induktivität im Arbeits- bzw. Kurzschlussstromkreis geschaffen, indem die Induktivität des Gehäusestromkreises eingekoppelt wird. Somit stellt sich eine erhöhte Induktivität im Arbeits- bzw. Kurzschlussstromkreis ein, wodurch ein breiterer bzw. länger andauernder Energiepuls, aber mit geringerer Amplitude auftritt. Die von dieser Kurzschlussstromdämpfung zu beherrschende Energie ist fast identisch, jedoch ist die Zerstörungsleistung maßgeblich reduziert, weil die Impulsivität des Stromanstieges im Kurzschlussfall gedämpft wird. Dies ist ein bedeutender Effekt, weil der Arbeits- bzw. Kurzschlussstromkreis zwecks geringer Verluste im Normalbetrieb der Leistungsbaugruppe sehr induktivitätsarm zu konstruieren ist.

Die Leistungsbaugruppe weist zumindest eine elektrische Leiterbaugruppe umfassend eine erste und eine zweite Stromschiene auf. Die erste und zweite Stromschiene sind neben- oder übereinander angeordnet und elektrisch voneinander isoliert. Die erste und zweite Stromschiene sind zum Leiten von gegenläufig gerichteten Strömen von der Energiespeicherbaugruppe zur Leistungshalbleiterbaugruppe und zurück vorgesehen, sodass deren gegensinnige Magnetfelder zumindest größtenteils aufhebbar bzw. kompensierbar sind. Dadurch kann in einfacher aber effektiver Art und Weise die induktive Einkopplung in den zumindest einen Gehäuseteil während dem Normalbetriebszustand der Leistungsbaugruppe gering gehalten werden, im Falle eines Kurzschlusses in der zumindest einen Leistungshalbleiterbaugruppe aber schlagartig und automatisch angehoben werden. Die angestrebte Kurzschlussstromdämpfung kommt somit beim Auftreten eines Kurzschlusses in der Leistungshalbleiterbaugruppe, insbesondere in der IGBT-Baugruppe, völlig selbsttätig und mit hoher Wirksamkeit zur Geltung.

Die oben genannte, doppelte, hinsichtlich der Stromflussrichtungen gegenläufige Stromschienen-Anordnung, häufig auch als Busbar-Anordnung bezeichnet, kann im Kurzschlussfall eine automatische Aufhebung der Stromsymmetrie in den neben- oder übereinander angeordneten Stromschienen bewirken und so die angestrebte Kurzschlussstromdämpfung automatisch aktivieren bzw. unterstützen.

Die Aufhebung oder Reduzierung der Magnetfeldkompensation in einer doppelten, gegenläufigen Stromschienen-Anordnung kann im Falle eines Kurzschlusses wie folgt zustande kommen: Im Kurzschlussfall werden aufgrund von z.B. Überspannungen oder mechanischen Beschädigungen, wie eines Bruches einer Isolationskeramik eines IGBT-Moduls, andere Strompfade für die Ströme eröffnet. Diese Strompfade heben die im Normalbetriebsfall herrschende Symmetrie des Stromflusses in den Stromschienen-Anordnungen, z.B. gebildet durch laminierte Busbar-Systeme, auf. Gegenläufige Ströme gleicher Stärke in neben- oder übereinander liegenden, aber elektrisch gegeneinander isolierten Stromschienen, erzeugen gegensinnige Magnetfelder, die sich somit größtenteils auslöschen. Daraus resultiert ein gegenüber Einzelleitern weit geringerer nach außen wirkender Magnetfeldaufbau, was eine vom Konstrukteur der Leistungsbaugruppe beabsichtigte, geringe wirksame Induktivität erzeugt. Abhängig vom konkreten Aufbau kann die Induktivität einer Busbar-Anordnung bzw. einer doppelten, gegenläufigen Stromschienen-Anordnung gegenüber einer Einzelleiter-Anordnung auf eine Größenordnung von bis zu 2% gesenkt werden.

Im Kurzschlussfall kann wegen entstehender Nebenstrompfade die oben genannte gegenläufige Symmetrie (Antisymmetrie) der Ströme in den neben- oder übereinander angeordneten Stromschienen reduziert bzw. gestört werden. Daraus folgt eine reduzierte gegenseitige Auslöschung der Einzelleiter-Magnetfelder und ein gegenüber dem Normalbetriebsfall stark vergrößertes nach außen wirksames Magnetfeld. Dieses Magnetfeld koppelt nun in den zumindest einen Gehäuseteil ein und erzielt dort den Abbau bzw. die Umwandlung zumindest eines Teils der im Kurzschlussfall fließenden bzw. frei werdenden Energie. Die Nebenstrompfade können bei einem Bruch der IGBT- Isolationskeramik durch einen Stromfluss z.B. über die Kühlvorrichtung bzw. die Kühlplatte entstehen, oder aufgrund von Störlichtbogen oder sich lösender, leitender Teile über das zumindest eine Gehäuseteil entstehen.

Gegenüber dem Auftreten von Magnetfeldern bei bloßer kurzschlussbedingter Erhöhung der Ströme innerhalb des Betriebsstromkreises tritt der oben genannte Effekt bei der Eröffnung eines Nebenstrompfades schlagartig ein, also bei Kurzschluss unter Beteiligung von Strompfaden, die im Normalbetrieb nicht mit Strömen beaufschlagt sind.

Die Erfindung betrifft auch einen Mittel- oder Hochspannungsumrichter mit einem Gestell bzw. einem sogenannten Rack, in welchem eine Mehrzahl von übereinander und/oder nebeneinander angeordneten Leistungsbaugruppen gemäß den Ansprüchen aufgenommen ist. Ein Vorteil eines solchen Mittel- oder Hochspannungsumrichters liegt darin, dass die Gefahr einer weitreichenden Beschädigung des Umrichters infolge eines kurzschlussbedingten Ausfalls einer Leistungsbaugruppe verringert ist. Insbesondere ist das Risiko eines ungewollten Totalausfalles eines anspruchsgemäßen Mittel- oder Hochspannungsumrichters minimiert. Eine kurzschlussbedingte Zerstörung einer als Submodul zu bezeichnenden Leistungsbaugruppe gemäß den Ansprüchen führt nämlich nicht bzw. kaum zu einer Beeinträchtigung von unmittelbar benachbart angeordneten, grundsätzlich intakten bzw. funktionsfähigen Leistungsbaugruppen. Durch die anspruchsgemäße Ausbildung ist es gegebenenfalls auch möglich, den Umrichter insgesamt kompakter auszuführen, weil die einzelnen Leistungsbaugruppen auch enger zueinander positioniert werden können, ohne einem erhöhten Risiko eines ungewollten, zerstörerischen Domino- bzw. Lawineneffekts zu unterliegen. Nachdem rein mechanische Maßnahmen zur Eindämmung von kurzschlussbedingten Explosionsschäden reduziert und/oder teilweise erübrigt werden können, können auch die Gesamtkosten bzw. Aufbaukosten eines anspruchsgemäßen Umrichters gering gehalten bzw. verringert werden.

Zum besseren Verständnis der Erfindung wird diese anhand der nachfolgenden Ausführungsbeispiele näher erläutert.

Es zeigen jeweils in stark vereinfachter, schematischer Darstellung:
- Fig. 1: eine Schrägansicht eines Teils eines beispielhaften Mittel- oder Hochspannungsumrichters mit drei übereinander angeordneten Leistungsbaugruppen;
- Fig. 2: eine Schrägansicht eines Ausführungsbeispiels einer Leistungsbaugruppe mit einer lastabtragenden Kühlplatte;
- Fig. 3: den Grundaufbau einer Leistungsbaugruppe für einen Mittel- oder Hochspannungsumrichter in stark abstrahierter Darstellung;
- Fig. 4: die elektromagnetisch miteinander gekoppelten Leiterschleifen der Leistungsbaugruppe gemäß Fig. 3, insbesondere deren Arbeits- bzw. Leistungsstromkreis und Gehäusestromkreis;
- Fig. 5: ein Ersatzschaltbild zu dem elektromagnetisch gekoppelten Leistungs- und Gehäusestromkreis der Leistungsbaugruppe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

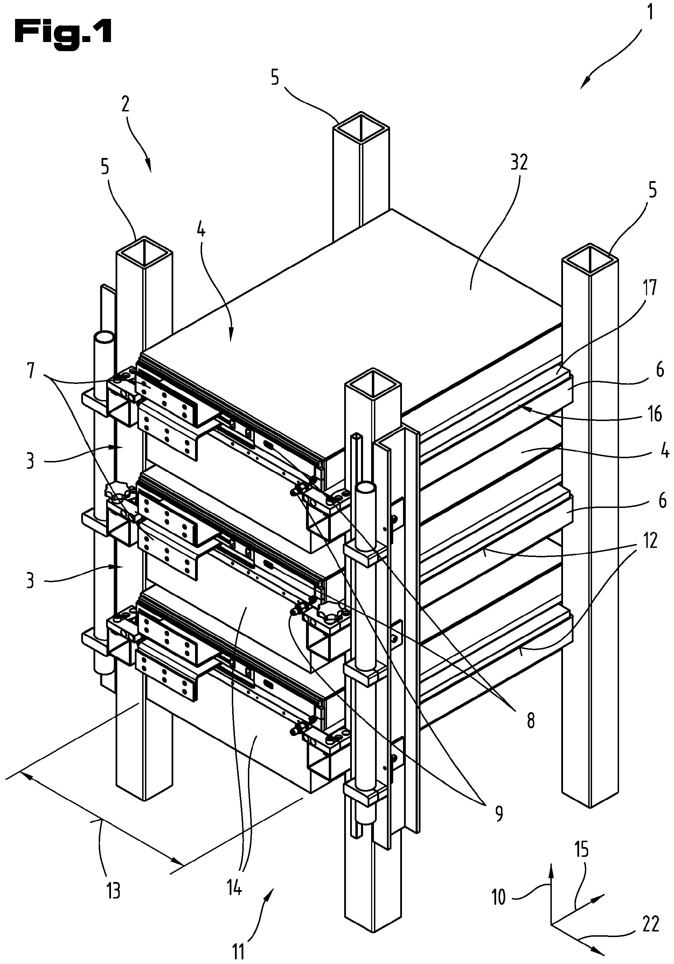

In Fig. 1 ist ein Beispiel für einen Mittel- oder Hochspannungsumrichter 1 dargestellt. Ein derartiger Mittel- oder Hochspannungsumrichter 1 weist ein Gestell 2 auf in welchem mehrere übereinander angeordnete Aufnahmeräume 3 zur Aufnahme von jeweils einer Leistungsbaugruppe 4 ausgebildet sind. Ein Mittel- oder Hochspannungsumrichter 1 kann mehrere derartige Gestelle 2 und somit eine Vielzahl von neben- und übereinander angeordneter Leistungsbaugruppen 4 aufweisen. Das Gestell 2 umfasst dabei Vertikalstehelemente 5, welche jeweils paarweise angeordnet sind und mittels horizontal ausgerichteter Tragelemente 6 verbunden sind. An der Rückseite des Gestells 2 können die Tragelemente 6 mittels Querelementen verbunden sein. Durch die Verbindung von Tragelementen 6 und einem Querelement wird ein Rahmen ausgebildet, wobei die Leistungsbaugruppe 4 zumindest an den Tragelementen 6 lastübertragend abgestützt wird.

Aus Fig. 1 ist weiters ersichtlich, dass jede Leistungsbaugruppe 4 eine Mehrzahl von Anschlüssen, wie etwa Stromanschlüsse 7, Steueranschlüsse 8 sowie Kühlmittelanschlüsse 9 aufweisen kann. Diese Anschlüsse liegen vorteilhafterweise in Vertikalrichtung 10 fluchtend zueinander ausgerichtet. Durch die Anordnung der Anschlüsse an der Frontseite 11 ist eine gute Zugänglichkeit für einen Bediener möglich. Die dargestellten Ausführungsbeispiele der Leistungsbaugruppen 4 sind in der Einsatzstellung dargestellt, wobei jede der Leistungsbaugruppen 4 mittels Stützflächen 12, welche gegenüber einer Energiespeicherbreite 13 einer Energiespeicherbaugruppe 14 vorragen, auf dem Gestell 2 bzw. an den Tragelementen 6 abgestützt ist. Für einen Wechsel einer Leistungsbaugruppe 4 ist es erforderlich, die Leistungsbaugruppe 4 in Längsrichtung 15 aus dem Gestell 2 zu bewegen.

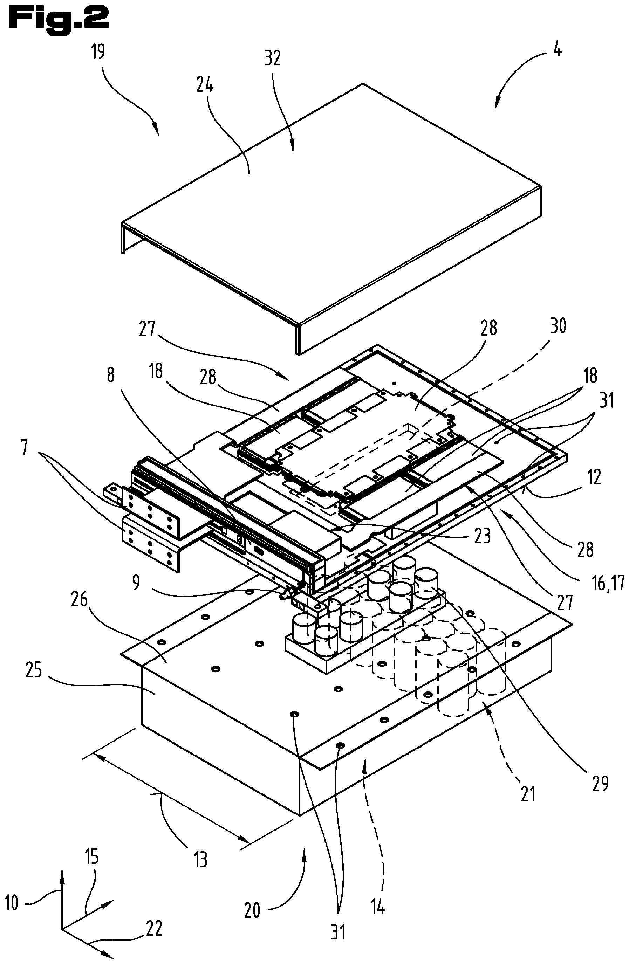

Die Leistungsbaugruppe 4 weist eine Kühlvorrichtung 16 auf, welche vorzugsweise wenigstens eine Kühlplatte 17 umfasst. Die Kühlplatte 17 dient einerseits zur lastübertragenden Abstützung am Gestell 2 sowie zur Abfuhr von Wärme ausgehend von zumindest einer Leistungshalbleiterbaugruppe 18 innerhalb der Leistungsbaugruppe 4. Die Kühlplatte 17 dient auch zur lastaufnehmenden Halterung von zumindest einer Energiespeicherbaugruppe 14 der Leistungsbaugruppe 4. Die zumindest eine Leistungshalbleiterbaugruppe 18 und die zumindest eine Energiespeicherbaugruppe 14 können an einer Ober- 19 und/oder Unterseite 20 der Kühlplatte 17 angeordnet sein. Ein vorteilhaftes Ausführungsbeispiel einer Anordnung der Leistungshalbleiterbaugruppe 18 an der Oberseite 19 der Kühlplatte 17 ist in Fig. 2 schematisch dargestellt. Bevorzugt wird die zumindest eine Energiespeicherbaugruppe 14 an der Unterseite 20 der Kühlplatte 17 angeordnet. Die Energiespeicherbaugruppe 14 weist vorzugsweise eine Vielzahl von Kondensatoren 21 auf, wodurch ein hohes Eigengewicht der Energiespeicherbaugruppe 14 von der Kühlplatte 17 getragen werden muss. Die in Fig. 2 in Explosionsdarstellung gezeigte, vorteilhafte Ausführungsform bietet den Effekt eines im Vergleich zu den Auflage- bzw. Stützflächen 12 niedriger angeordneten Schwerpunktes der Leistungsbaugruppe 4. Hierdurch kann eine Vermeidung eines unerwünschten Kippmoments in Quer- 22 oder Längsrichtung 15 bei einem Wechsel der Leistungsbaugruppe 4 erzielt werden.

Ferner kann aus Fig. 2 ersehen werden, dass die zumindest eine Leistungshalb-leiterbaugruppe 18 mit der Kühlplatte 17 thermisch leitfähig verbunden ist. Die dargestellte im Wesentlichen liegende Anordnung der Leistungshalbleiterbaugruppe 18 auf der Kühlplatte 17 bietet den weiteren Vorteil der Verteilung der Leistungshalbleiter über eine relativ große Auflagefläche an der Oberseite 19 der Kühlplatte 17. Hierdurch und in Verbindung mit der direkten thermischen Anbindung an die Kühlplatte 17 kann eine hocheffiziente Wärmeabfuhr von der Leistungshalbleiterbaugruppe 18 sichergestellt werden. Die schematisch dargestellte Steuervorrichtung 23 kann ebenfalls an einer geeigneten Position an der Kühlplatte 17 angeordnet sein. Grundsätzlich ist eine umgekehrte Anordnung der Leistungshalbleiterbaugruppe 18 an der Unterseite 20 und der Energiespeicherbaugruppe 14 an der Oberseite 19 denkbar. Je nach Komplexität kann eine Leistungsbaugruppe 4 auch beide Komponenten an der jeweiligen Seite ausgebildet haben.

Da die Kühlvorrichtung 16 vorzugsweise als von einem Kühlmittel durchströmbare, insbesondere von einer Kühlflüssigkeit durchfließbare, Kühlplatte 17 ausgebildet ist, kann die Kühlplatte 17 als Aufbau- bzw. Trägerplattform für die einzelnen Komponenten der Leistungsbaugruppe 4 genutzt werden. Dieser Plattformgedanke kann dazu genutzt werden, Mittel- oder Hochspannungsumrichter 1 mit für den jeweiligen Einsatz optimierten Leistungsbaugruppen 4 auszustatten.

Des Weiteren kann aus Fig. 2 ersehen werden, dass ein Oberseitengehäuse 24 und/oder ein Unterseitengehäuse 25 - nachfolgend auch als Gehäuseteile 32 bezeichnet - vorgesehen sein können. Dieses zumindest eine Gehäuseteil 32 ist nicht zwingend in allen drei Raumrichtungen geschlossen, jedoch kann es von Vorteil sein, wenn, insbesondere in Querrichtung 22 sowie in Längsrichtung 15, die Seitenflächen zum mechanischen Explosionsschutz abgeschlossen sind. Es hat sich als Vorteil erwiesen, dass das Ober- 24 oder Unterseitengehäuse 25, welches zur Aufnahme der Energiespeicherbaugruppe 14 vorgesehen ist, ein Boden- bzw. Deckelelement 26 ausgebildet hat. Im Ausführungsbeispiel von Fig. 2 ist ein derartiges Deckelelement 26 als Abschluss des Unterseitengehäuses 25 in Vertikalrichtung 10 dargestellt.

Die vom Unterseitengehäuse 25 aufgenommenen Kondensatoren 21, welche die Energiespeicherbaugruppe 14 bilden, sind mittels elektrischer Leiter 27, vorzugsweise in Art von elektrischen Stromschienen 28, mit der zumindest einen Leistungshalbleiterbaugruppe 18 verbunden. Diese Stromschienen 28 sind flächige, im Querschnitt typischerweise rechteckig ausgebildete, elektrische Leiter 27, welche vorzugsweise aus Kupfer gebildet sind.

Die elektrischen Anschlüsse der Energiespeicherbaugruppe 14 können beispielsweise zu schematisch dargestellten Anschlussterminals 29 zusammengefasst sein. Die zentrale Anordnung der Anschlussterminals 29 an einer Oberseite der Energiespeicherbaugruppe 14 und die vorzugsweise symmetrische Ausbildung bzw. Positionierung der schematisch dargestellten Stromschienen 28 kann zur Vermeidung parasitärer Induktivitäten dienen. Um eine Kontaktierung bzw. elektrische Verbindung der Anschlussterminals 29 und der Leistungshalbleiterbaugruppe 18 zu ermöglichen, ist die Kühlplatte 17 mittels zumindest einer Anschlussöffnung 30 in Vertikalrichtung 10 durchbrochen. Die Position der Steuervorrichtung 23 kann vom Fachmann entsprechend optimiert werden, und ist in der beispielhaften Darstellung an der Oberseite 19 der Kühlplatte 17 frontseitig gewählt.

Bevorzugt wird das Deckelelement 26 in Vertikalrichtung 10 durch die Kühlplatte 17 mit dieser verbunden. Diese Befestigungsstellen 31 können somit über die Grundfläche der Kühlplatte 17 in Längsrichtung 10 und Querrichtung 22 verteilt sein, wodurch eine großflächige Verbindung der Kühlplatte 17 mit dem Deckelelement 26 gewährleistet ist und eine Spaltbildung vermieden werden kann. Durch diese Maßnahme kann ein ausreichend guter Wärmeübergang zwischen der Kühlplatte 17 und dem Deckelelement 26 in Richtung zur Energiespeicherbaugruppe 14 gewährleistet werden. Das Deckelelement 26 wird in einem derartigen Fall als Teil der Kühlplatte 17 verstanden.

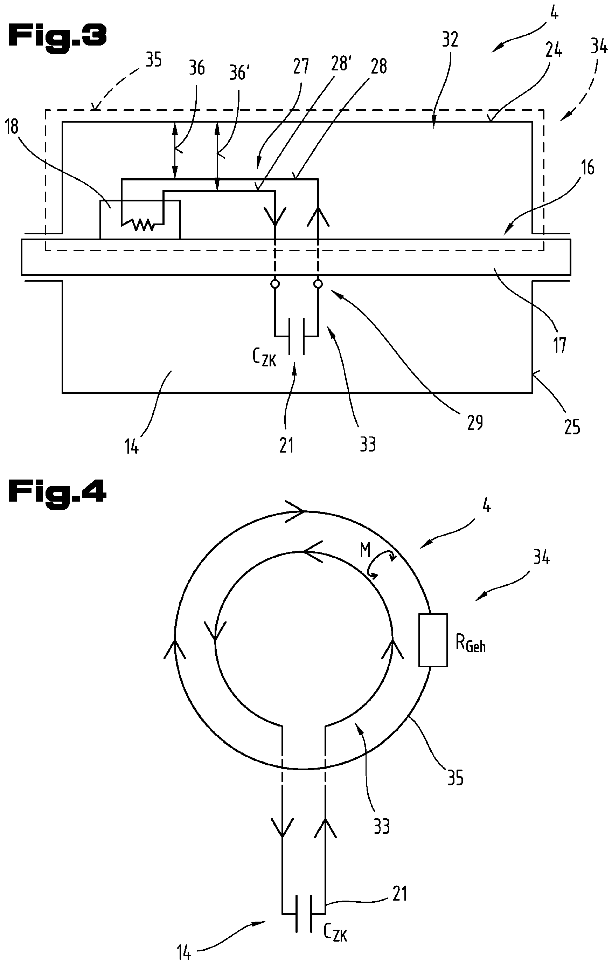

In den Fig. 3 und 4 ist stark abstrahiert der technische Zusammenhang zwischen der Kühlvorrichtung 16 bzw. der Kühlplatte 17, der Leistungshalbleiterbaugruppe 18, dem zumindest einen elektrischem Leiter 27 bzw. den Stromschienen 28, 28`, der Energiespeicherbaugruppe 14, und wenigstens einem Gehäuseteil 32, insbesondere dem Oberseitengehäuse 24 und/oder dem Unterseitengehäuse 25, dargestellt.

Ein Arbeits- bzw. Leistungsstromkreis 33 in der Leistungsbaugruppe 4 bezieht dabei folgende Komponenten ein: Ein Spannungszwischenkreis umfasst die Energiespeicherbaugruppe 14 mit seinen Anschlussterminals 29. Die zumindest eine Leistungshalbleiterbaugruppe 18 ist abstrahiert auf der Kühlplatte 17 dargestellt. Die zumindest eine Leistungshalbleiterbaugruppe 18 ist mit der Energiespeicherbaugruppe 14 über die flächig bzw. streifenförmig ausgeführten Stromschienen 28, 28`, sogenannte Busbars, elektrisch leitfähig verbunden. Die Stromschienen 28, 28` sind mechanisch so parallel zueinander montiert, dass sich bei einem regulären Stromfluss die Magnetfelder der Stromschienen 28, 28` gegenseitig möglichst kompensieren. Über diese Stromschienen 28, 28` fließen die im Normalbetrieb gewünschten Leistungsströme des Mittel- oder Hochspannungsumrichters 1 - Fig. 1.

Im Defektfall bilden die oben genannten Komponenten einen Kurzschluss-Stromkreis innerhalb der jeweiligen Leistungsbaugruppe 4 aus. Die Energie der Energiespeicherbaugruppe 14 bzw. der Kondensatoren 21 wird bei einem Kurzschluss in den Halbleiter-Schaltelementen der Leistungshalbleiterbaugruppe 18 über die Stromschienen 28, 28` bzw. die Busbars schlagartig in die Leistungshalbleiterbaugruppe 18 entladen bzw. überführt. Im Falle eines Kurzschlusses können auch neue bzw. zusätzliche Strompfade (Nebenstrompfade) in der Leistungsbaugruppe 4 entstehen, welche beispielsweise infolge eines Bruches der Isolationskeramik der Leistungshalbleiterbaugruppe 18 bzw. der IGBT-Baugruppe, infolge von Lichtbogenbildungen, oder infolge von sich lösenden Teilen in der Leistungsbaugruppe 4 verursacht werden.

Zur Schaffung einer vorteilhaften Kurzschlussstromdämpfung 34 ist zumindest ein induktiv koppelbarer, elektrisch leitender Kreis vorgesehen, im Nachfolgenden kurz Gehäusestromkreis 35 genannt. Dieser Gehäusestromkreis 35 umfasst zumindest ein Gehäuseteil 32. Beispielsgemäß wird der Gehäusestromkreis 35 durch die Kühlplatte 17 und zumindest durch das Oberseitengehäuse 24 definiert. Beide sind aus einem elektrisch leitfähigen Material gebildet und elektrisch leitend miteinander verbunden, beispielsweise mittels um den Umfangsbereich der Kühlplatte 17 verlaufender, gegenseitiger Verschraubungsreihen.

Das Wirkungsprinzip der Kurzschlussstromdämpfung 34 ist dabei wie folgt: Im Kurzschlussfall ist die Amplitude des ungedämpften Kurzschlussstroms um ein Vielfaches höher als der Normalbetriebsstrom, beispielsweise 2 Mega-Ampere Kurzschluss-Spitzenstrom im Vergleich zu 2000 Ampere Dauerbetriebsstrom bzw. Nennstrom. Außerdem ist ein Kurzschlussstrom ein impulsartiger Strom, besitzt also eine große Stromsteilheit di/dt, welche hauptsächlich durch die konstruktiv gewollte niedrige Streuinduktivität L'_{LK} im Leistungsstromkreises 33 bestimmt ist - Fig. 5.

Das hat zur Folge, dass die stromdurchflossenen elektrischen Leiter 27 bzw. die Stromschienen 28, 28' in der Leistungsbaugruppe 4 in einem Kurzschlusszustand signifikant stärkere Magnetfelder aufbauen als im Normalbetrieb. Insbesondere kann es vorkommen, dass im Defektfall die zweite Stromschiene 28`, welche zur ersten Stromschiene 28 überwiegend parallel läuft, aufgrund von entstehenden Nebenstrompfaden keinen Strom mehr führt oder deutlich weniger Strom führt. Die grundsätzlich vorhandene Magnetfeldkompensation zwischen den Stromschienen 28, 28` ist somit aufgehoben oder deutlich geschwächt. Die erste Stromschiene 28 erzeugt dadurch ein starkes, nach außen wirkendes Kurzschluss-Magnetfeld. Dieses Kurzschluss-Magnetfeld des Leistungsstromkreises 33 koppelt in den Gehäusestromkreis 35 ein. Die Fig. 4 zeigt den Grundaufbau aus Fig. 3 mit einer abstrahierten Darstellung des Leistungsstromkreises 33 und des Gehäusestromkreises 35. Die Fig. 5 zeigt das Ersatzschaltbild resultierend aus Fig. 4, inklusive der magnetischen Kopplung M und der Streuinduktivitäten L'_{LK} und L'_{Geh}.

Im Gehäusestromkreis 35 wird aufgrund der hohen Steilheit des im Leistungsstromkreis 33 fließenden Kurzschlussstromes und/oder aufgrund der durch einen Kurzschluss hervorgerufenen Nebenstrompfade eine Spannung induziert, die einen Stromfluss im Gehäusestromkreis 35 zur Folge hat. Besonders zweckmäßig ist es dabei, wenn der Gehäusestromkreis 35 bewusst mit ohmschen Widerständen R_{Geh} - Fig. 4, 5 - versehen ist, welche ohmsche Verluste definieren. Dies kann beispielsweise durch bewusst gewählte Materialien mit einem definierten ohmschem Widerstand erreicht werden, wie beispielsweise Edelstahl für das Oberseitengehäuse 24 und/oder bestimmte Aluminium-Legierungen für die Kühlplatte 17. Durch diese ohmschen Verluste wird eine auf den Gehäusestromkreis 35 transformierte elektrische Leistung in Wärme umgewandelt. Diese Energie wird somit dem Leistungsstromkreis 33 und folglich auch dem Spannungszwischenkreis transformatorisch entnommen. Diese technische Maßnahme reduziert die elektrische Energie und die Leistung, die in Zusammenhang mit einer Beschädigung bzw. explosionsartigen Zerstörung der zumindest einen Leistungshalbleiterbaugruppe 18 verbleibt.

Wie der Fig. 5 zu entnehmen ist, besitzt auch der Gehäusestromkreis 35 eine gewisse Induktivität bzw. Streuinduktivität L'_{Geh}. Die Streuinduktivität L'_{Geh} des Gehäusestromkreises 35 ist dabei aufgrund der größeren umschlossenen Gehäusestromkreis-Schleifenfläche größer als die parasitäre Streuinduktivität L'_{LK} des Leistungsstromkreises 33. Diese Streuinduktivität L'_{Geh} wird ebenso transformatorisch auf den Leistungsstromkreis 33 übertragen und drosselt dort den Anstieg des Kurzschlussstromes. Der entsprechende Kurzschluss-Stromimpuls wird so abgeflacht. Insbesondere wird die für die mechanische Belastung der Leistungshalbleiterbaugruppe 18 entscheidende Puls-Spitzenleistung reduziert, obwohl die Pulsenergie per se durch die Streuinduktivität L'_{Geh} nicht wesentlich beeinflusst wird. Für diese transformatorische Energieübertragung ist ein Stromfluss im Leistungsstromkreis 33 erforderlich. Es kann also nicht die komplette Energie des Spannungszwischenkreises auf den Gehäusestromkreis 35 übertragen werden, weil sonst der Stromfluss im Leistungsstromkreis 33 zum Erliegen käme. Es verbleibt eine gewisse Energie im Leistungsstromkreis 33, die einen Schaden in der Leistungshalbleiterbaugruppe 18 verursacht, insbesondere weiterhin zu deren Explosion führen kann, jedoch mit deutlich geringerer bzw. zeitlich verteilter Explosions- bzw. Impulsenergie. Es ist also davon auszugehen, dass der zumindest eine Gehäuseteil 32 zur Überdeckung der zumindest einen Leistungshalbleiterbaugruppe 18, insbesondere das Oberseitengehäuse 24, weiterhin so ausgeführt sein muss, dass es gewissen Druckimpulsen und Explosionsenergien standhält. Die auftretenden Druckimpulsen bzw. Explosionsenergien werden jedoch weit geringer sein als ohne der anspruchsgemäßen Kurzschlussstromdämpfung 34.

Beim Auftreten eines Kurzschlussfalles ist kein aktiver bzw. kein steuerungstechnischer Eingriff in die Leistungsbaugruppe 4 erforderlich - die beschriebene Kurzschlussstromdämpfung 34 wirkt selbsttätig. Die angegebene Kurzschlussstromdämpfung 34 ist zudem selbstverstärkend: Je höher die Kurzschlussstrom-Amplitude und die Kurzschlussstrom-Steilheit sind, desto stärker ist der Effekt der magnetischen Kopplung M. Die Kopplung M - Fig. 4, 5 - ist im Vergleich zu einem Netztransformator relativ schlecht, was aber gewollt ist: Für den Normalbetrieb der Leistungsbaugruppe 4 ist es vorteilhaft, den Kopplungseffekt derart gering zu halten, dass keine oder zumindest keine nennenswerten Energieverluste auftreten. Normalbetriebsströme im Leistungsstromkreis 33 sollen nicht bzw. nur marginal in das zumindest eine Gehäuseteil 32 einkoppeln und dabei Verluste verursachen. Dies kann beispielsweise durch gezielt gewählte Abstände 36, 36` - Fig. 3 - der elektrischen Leiter 27 bzw. der Stromschienen 28, 28` zu dem zumindest einen Gehäuseteil 32, insbesondere zum Gehäuseoberteil 24 erreicht werden. Nützlich ist dabei auch, dass im Normalbetriebsfall die Ströme im Leistungsstromkreis 33 im Vergleich zum Kurzschlussfall wesentlich geringere Stromsteilheiten bzw. Anstiegsgeschwindigkeiten aufweisen. Dadurch ist der transformatorische Koppeleffekt M im Normalbetriebsfall deutlich geringer als im Kurzschlussfall. Nützlich kann aber auch sein, dass die Antisymmetrie bzw. der Aufhebungseffekt der Busbar-Ströme in den neben- oder übereinander angeordneten Stromschienen 28, 28` im Kurzschlussfall aufgrund von sich ausbildenden Nebenstrompfaden aufgehoben werden kann und so der transformatorische Koppeleffekt M gegenüber dem zumindest einen Gehäuseteil 32 aktiviert bzw. deutlich angehoben werden kann.

In vorteilhafter Weise kann die Wirkung der Kurzschlussstromdämpfung 34 an das jeweilige Kurzschlussstrom-Verhalten der Leistungsbaugruppe 4 angepasst werden. Das Kurzschlussstrom-Verhalten wird dabei maßgeblich durch die Speicherkapazität der Energiespeicherbaugruppe 14 bzw. der Kondensatoren 21 und durch die parasitären Induktivitäten im Leistungsstromkreis 33 bestimmt. Vorzugsweise ist der Abstand 36 und/oder eine räumliche Ausrichtung und/oder die flächenbezogene Überdeckung zwischen dem zumindest einen elektrischen Leiter 27, insbesondere der zumindest einen Stromschiene 28, und dem zumindest einen Gehäuseteil 32 in der Nähe zur Leistungshalbleiterbaugruppe 18 derart ausgebildet, dass bei einem Auftreten eines kurzschlussartigen bzw. kurzschlussbedingten Stromanstieges in dem zumindest einen elektrischen Leiter 27, insbesondere in der zumindest einen Stromschiene 28, 28`, eine induktive Kopplung M zwischen dem zumindest einen elektrischen Leiter 27, insbesondere der zumindest einen Stromschiene 28, 28`, und dem zumindest einen Gehäuseteil 32 aufbaubar ist bzw. derart aufgebaut ist, sodass mehr als 20%, vorzugsweise mehr als 40%, der elektrischen Energie der Energiespeicherbaugruppe 14 in das zumindest eine Gehäuseteil 32 einkoppelbar ist. Alternativ dazu kann die Kurzschlussstromdämpfung 34 derart eingestellt sein bzw. derart wirken, dass eine maximale Höhe bzw. Amplitude eines Kurzschlussstromes in dem zumindest einen elektrischen Leiter 27 in Richtung zur Leistungshalbleiterbaugruppe 18 im Vergleich zu einer Ausführung ohne Kurzschlussstromdämpfung 34 um mehr als 50% gedämpft wird.

Die Kurzschlussstromdämpfung 34 ist nicht nur in einer Dimension bzw. Richtung der Leistungsbaugruppe 4 anwendbar. Wenn das Oberseitengehäuse 24 allseitig mit der Kühlplatte 17 verschraubt ist, so führen auch Kurzschlussströme zu einer Kopplung M, die nicht nur in eine Richtung verlaufen, sondern in mehreren Richtungen. Im Übrigen ist es durchaus möglich, dass Magnetfelder der Stromschienen 28, 28` in gewissen Richtungen Wirbelströme in der Oberfläche der Kühlplatte 17 und/oder des Oberseitengehäuses 24 induzieren - dies vor allem im Kurzschlussfall. Dies erzeugt zusätzliche gewollte Verluste, wodurch die Wirkung der beschriebenen Kurzschlussstromdämpfung 34 sogar noch verstärkt bzw. unterstützt wird.

Die angegebene Kurzschlussstromdämpfung 34 nutzt gezielt induktive bzw. transformatorische Kopplungswirkungen. Es wird dabei absichtlich eine verlustbehaftete magnetische Kopplung M zu zumindest einem Gehäuseteil 32 aufgebaut - dies jedoch nur für bestimmte Fälle, insbesondere für Kurzschlusszustände, nicht aber für den Normalbetriebsfall der Leistungsbaugruppe 4. Der gewünschte Effekt ist zudem selbsttätig bzw. selbstregulierend.

Auch wenn in den vorhergehenden Ausführungsbeispielen die Leistungsbaugruppe 4 primär anhand eines Submoduls für einen modularen Mittel- oder Hochspannungsumrichter 1 beschrieben wurde, ist eine Leistungsbaugruppe 4 mit einer Kurzschlussstromdämpfung 34 gemäß den Ansprüchen auch in einem leistungselektronischen Antriebsstrang bzw. Umrichter von Elektro- bzw. Hybridfahrzeugen vorteilhaft anwendbar. Die Energiespeicherbaugruppe 14 ist dann durch eine Batterie- bzw. Akku-Baugruppe definiert. Die Folgen von defektbedingten Kurzschlüssen im Antriebsstrang von Elektrofahrzeugen können dadurch gemildert oder entschärft werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Mittel- oder Hochspannungsum-richter | 29 | Anschlussterminal |
| | | 30 | Anschlussöffnung |
| | | 31 | Befestigungsstellen |
| 2 | Gestell | 32 | Gehäuseteil |
| 3 | Aufnahmeraum | 33 | Leistungsstromkreis |
| 4 | Leistungsbaugruppe | 34 | Kurzschlussstromdämpfung |
| 5 | Vertikalstehelement | 35 | Gehäusestromkreis |
| 6 | Tragelement | 36, 36` | Abstand |
| 7 | Stromanschlüsse | | |
| 8 | Steueranschlüsse | M | induktive Kopplung |
| 9 | Kühlmittelanschlüsse | C_{ZK} | Zwischenkreiskondensator |
| 10 | Vertikalrichtung | L'_{LK} | Streuinduktivität des Leistungsstromkreises |
| 11 | Frontseite | | |
| 12 | Stützfläche | L'_{Geh} | Streuinduktivität des Gehäusestromkreises |
| 13 | Energiespeicherbreite | | |
| 14 | Energiespeicherbaugruppe | R_{Geh} | Widerstand des Gehäusestromkreises |
| 15 | Längsrichtung | | |
| 16 | Kühlvorrichtung | | |
| 17 | Kühlplatte | | |
| 18 | Leistungshalbleiterbaugruppe | | |
| 19 | Oberseite | | |
| 20 | Unterseite | | |
| 21 | Kondensatoren | | |
| 22 | Querrichtung | | |
| 23 | Steuervorrichtung | | |
| 24 | Oberseitengehäuse | | |
| 25 | Unterseitengehäuse | | |
| 26 | Deckelelement | | |
| 27 | elektrischer Leiter | | |
| 28, 28` | Stromschiene | | |

## Patentansprüche

1. Leistungsbaugruppe (4) für einen vorzugsweise modularen Mittel- oder Hochspannungsumrichter (1) oder für einen leistungselektronischen Umrichter eines Elektrofahrzeuges, umfassend
- zumindest eine Leistungshalbleiterbaugruppe (18), vorzugsweise eine IGBT-Baugruppe,
- zumindest eine Energiespeicherbaugruppe (14),
- zumindest eine Kühlvorrichtung (16), welche Kühlvorrichtung (16) als vorzugsweise von einem Kühlmittel durchströmbare Kühlplatte (17) ausgebildet ist,
- zumindest ein Gehäuseteil (32) zur wenigstens teilweisen Überdeckung zumindest der Leistungshalbleiterbaugruppe (18),
**dadurch gekennzeichnet, dass**
das zumindest eine Gehäuseteil (32) aus einem elektrisch leitfähigen Material gebildet ist,
oder zumindest in einem überwiegenden Teilabschnitt seiner Begrenzungsfläche ein elektrisch leitfähiges Material aufweist,
dass die Leistungsbaugruppe (4) zumindest einen durch eine Stromschiene (28, 28') gebildeten elektrischen Leiter (27) zur Übertragung von elektrischer Energie zwischen der zumindest einen Energiespeicherbaugruppe (14) und der zumindest einen Leistungshalbleiterbaugruppe (18) umfasst,
dass der zumindest eine elektrische Leiter (27) eine erste und eine zweite Stromschiene (28, 28') aufweist, welche neben- oder übereinander angeordnet sind und elektrisch voneinander isoliert sind, und welche erste und zweite Stromschiene (28, 28') zum Leiten von gegenläufig gerichteten Strömen vorgesehen sind, sodass deren gegensinnige Magnetfelder zumindest größtenteils aufhebbar sind,
und dass eine Kurzschlussstromdämpfung (34) ausgebildet ist, bei welcher ein Abstand (36, 36') und/oder eine Ausrichtung und/oder eine flächenbezogene Überdeckung zwischen dem zumindest einen elektrischen Leiter (27) und dem zumindest einen Gehäuseteil (32) derart ausgebildet ist, dass die Kurzschlussstromdämpfung (34) im Normalbetriebszustand der Leistungsbaugruppe bzw. des modularen Umrichters nicht aktiv ist, und
dass bei einem Auftreten eines kurzschlussartigen oder kurzschlussbedingten Stromanstieges in dem zumindest einen elektrischen Leiter (27) eine induktive Kopplung (M) zwischen dem zumindest einen elektrischen Leiter (27) und dem zumindest einen Gehäuseteil (32) aufbaubar ist.

2. Leistungsbaugruppe nach Anspruch 1 **dadurch gekennzeichnet, dass** die induktive Kopplung (M) zwischen dem zumindest einen elektrischen Leiter (27) und dem zumindest einen Gehäuseteil (32) im Falle eines kurzschlussartigen oder kurzschlussbedingten Stromanstieges in dem zumindest einen elektrischen Leiter (27) derart aufgebaut ist, dass mehr als 20%, vorzugsweise mehr als 40%, der elektrischen Energie der Energiespeicherbaugruppe (14) in das zumindest eine Gehäuseteil (32) einkoppelbar ist, oder eine maximale Höhe eines Kurzschlussstromes in dem zumindest einen elektrischen Leiter (27) im Vergleich zu einer Ausführung ohne der Kurzschlussstromdämpfung (34) um mehr als 50% gedämpft ist.

3. Leistungsbaugruppe nach Anspruch 1 oder 2 **dadurch gekennzeichnet, dass** der Abstand (36, 36') und/oder die Ausrichtung und/oder die flächenbezogene Überdeckung zwischen dem zumindest einen elektrischen Leiter (27) und dem zumindest einen Gehäuseteil (32) derart ausgebildet ist, dass im Normalbetrieb der Leistungsbaugruppe (4), insbesondere ohne Auftreten eines fehlerbedingten Kurzschlussstromes, eine induktive Einkopplung der Leistung aus der Energiespeicherbaugruppe (14) in das zumindest eine Gehäuseteil (32) weniger als 2 % jener Leistung beträgt, welche über den zumindest einen elektrischen Leiter (27) an die Leistungshalbleiterbaugruppe (18) übertragen wird.

4. Leistungsbaugruppe nach einem der vorhergehenden Ansprüche **dadurch gekennzeichnet, dass** der zumindest eine Gehäuseteil (32) mit der Kühlplatte (17) elektrisch leitfähig verbunden ist, insbesondere über elektrisch leitfähige Kontaktflächen auf der elektrisch leitfähigen, vorzugsweise Aluminium aufweisenden, Kühlplatte (17) abgestützt ist.

5. Leistungsbaugruppe nach einem der vorhergehenden Ansprüche **dadurch gekennzeichnet, dass** der zumindest eine Gehäuseteil (32) vorzugsweise haubenartig ausgebildet ist, oder deckelartig ausgebildet ist.

6. Leistungsbaugruppe nach Anspruch 4 oder 5 **dadurch gekennzeichnet, dass** der zumindest eine Gehäuseteil (32) an zumindest zwei einander gegenüberliegenden Endabschnitten oder an allen Seiten mit der elektrisch leitfähigen Kühlplatte (17) elektrisch leitfähig verbunden ist, sodass ein elektrisch leitfähiger Gehäusestromkreis (35) umfassend die Kühlplatte (17) und den zumindest einen Gehäuseteil (32) um den zumindest einen elektrischen Leiter (27) und die Leistungshalbleiterbaugruppe (18) herum aufgebaut ist.

7. Leistungsbaugruppe nach einem der Ansprüche 1 bis 5 **dadurch gekennzeichnet, dass** der zumindest eine Gehäuseteil (32) in Kombination mit zumindest einem weiteren Gehäuseteil (25) bei einem kurzschlussartigen oder kurzschlussbedingten Stromanstieg einen transformatorisch gekoppelten Gehäusestromkreis (35) um die Leistungshalbleiterbaugruppe (18) und den zumindest einen elektrischen Leiter (27) ausbildet.

8. Leistungsbaugruppe nach einem der vorhergehenden Ansprüche **dadurch gekennzeichnet, dass** das zumindest eine Gehäuseteil (32) durch ein Material, beispielsweise Edelstahl, gebildet, welches einen höheren ohmschen Widerstand aufweist, als der ohmsche Widerstand des Materials der Kühlplatte (17), beispielsweise Aluminium oder eine Aluminiumlegierung, aufweist.

9. Leistungsbaugruppe nach einem der vorhergehenden Ansprüche **dadurch gekennzeichnet, dass** der Abstand (36, 36') und/oder die Ausrichtung und/oder die flächenbezogene Überdeckung zwischen dem zumindest einen elektrischen Leiter (27) und dem zumindest einen Gehäuseteil (32) derart gewählt ist, dass mittels der induktiven Kopplung (M) zwischen dem zumindest einen von einem Kurzschlussstrom durchflossenen elektrischen Leiter (27) und dem zumindest einen Gehäuseteil (32) innerhalb des zumindest einen Gehäuseteils (32) elektrische Wirbelströme induziert werden, die Energie aus der Energiespeicherbaugruppe (14) mittels ohmscher Widerstände in dem zumindest einen Gehäuseteil (32) in Wärme umwandeln.

10. Leistungsbaugruppe nach einem der vorhergehenden Ansprüche **dadurch gekennzeichnet, dass** die elektromagnetische Kopplung (M) des zumindest einen mit Kurzschlussstrom beaufschlagten elektrischen Leiters (27) gegenüber dem aus dem zumindest einen Gehäuseteil (32) gebildeten Gehäusestromkreis (35) derart gewählt und festgelegt ist, dass im Fehler- oder Kurzschlussfall die Induktivität des Gehäusestromkreises (35) transformatorisch in den Leistungsstromkreis (33) transformiert wird, sodass eine Stromanstiegsgeschwindigkeit im Leistungsstromkreis (33) bei einem fehlerbedingten, kurzschlussartigen Stromanstieg verringert wird.

11. Leistungsbaugruppe nach einem der vorhergehenden Ansprüche **dadurch gekennzeichnet, dass** die Energiespeicherbaugruppe (14) eine elektrische Kapazität aufweist, welche bei einem Versagen oder Fehler der zumindest einen Leistungshalbleiterbaugruppe (18) und ohne Vorhandensein oder ohne Wirkung der Kurzschlussstromdämpfung (34) in dem zumindest einen elektrischen Leiter (27) einen Kurzschlussstrom verursacht, welcher mehr als das 100-fache, insbesondere mehr als das 500-fache eines Normalbetriebsstromes in dem zumindest einen elektrischen Leiter (27) beträgt.

12. Mittel- oder Hochspannungsumrichter (1) mit einem Gestell (2) in welchem eine Mehrzahl von übereinander und/oder nebeneinander angeordneten Leistungsbaugruppen aufgenommen und elektrisch in Serie ist, **dadurch gekennzeichnet, dass** die Leistungsbaugruppen (4) nach einem oder mehreren der vorhergehenden Ansprüche ausgebildet sind.

## Claims

1. A power module (4) for a preferably modular medium or high voltage converter (1) or for a power electronic converter of an electric vehicle, comprising
- at least one power semiconductor module (18), preferably an IGBT module,
- at least one energy storage module (14),
- at least one cooling device (16), which cooling device (16) is configured as a cooling plate (17) through which a coolant can preferably flow,
- at least one housing part (32) for at least partially covering at least the power semiconductor module (18),
**characterized in that**
the at least one housing part (32) is formed from an electrically conductive material, or has an electrically conductive material at least in a predominant sub-section of its boundary surface,
that the power module (4) comprises at least one electrical conductor (27), formed by a busbar (28, 28'), for transmitting electrical energy between the at least one energy storage module (14) and the at least one power semiconductor module (18),
that the at least one electrical conductor (27) has a first and a second busbar (28, 28'), which are arranged next to or above one another and are electrically insulated from one another, and which first and second busbars (28, 28') are provided for conducting oppositely directed currents, so that their opposing magnetic fields can be at least largely canceled out,
and that a short-circuit current attenuation (34) is formed, in which a distance (36, 36') and/or an alignment and/or an area-related overlap between the at least one electrical conductor (27) and the at least one housing part (32) is formed in such a way that the short-circuit current attenuation (34) is not active in the normal operating state of the power module and/or of the modular converter, and
that, when a short-circuit-like or short-circuit-induced current increase occurs in the at least one electrical conductor (27), an inductive coupling (M) can be established between the at least one electrical conductor (27) and the at least one housing part (32).

2. A power module according to claim 1, **characterized in that** the inductive coupling (M) between the at least one electrical conductor (27) and the at least one housing part (32) in the event of a short-circuit or short-circuit-induced current increase in the at least one electrical conductor (27) is established in such a way that more than 20%, preferably more than 40% of the electrical energy of the energy storage module (14) can be coupled into the at least one housing part (32), or a maximum level of a short-circuit current in the at least one electrical conductor (27) is attenuated by more than 50% compared to an embodiment without the short-circuit current attenuation (34).

3. A power module according to claim 1 or 2, **characterized in that** the distance (36, 36') and/or the alignment and/or the area-related overlap between the at least one electrical conductor (27) and the at least one housing part (32) is configured in such a way that, in normal operation of the power module (4), in particular without the occurrence of a fault-related short-circuit current, an inductive coupling of power from the energy storage module (14) into the at least one housing part (32) is less than 2% of that power which is transmitted to the power semiconductor module (18) via the at least one electrical conductor (27).

4. The power module according to one of the preceding claims, **characterized in that** the at least one housing part (32) is electrically conductively connected to the cooling plate (17), in particular is supported on the electrically conductive cooling plate (17), which preferably comprises aluminum, via electrically conductive contact surfaces.

5. The power module according to one of the preceding claims, **characterized in that** the at least one housing part (32) preferably has a hood-like design, or has a cover-like design.

6. The power module according to claim 4 or 5, **characterized in that** the at least one housing part (32) is electrically conductively connected to the electrically conductive cooling plate (17) at at least two mutually opposite end sections or on all sides, so that an electrically conductive housing circuit (35) comprising the cooling plate (17) and the at least one housing part (32) is constructed around the at least one electrical conductor (27) and the power semiconductor module (18).

7. The power module according to one of claims 1 to 5, **characterized in that** the at least one housing part (32), in combination with at least one further housing part (25), forms a transformer-coupled housing circuit (35) around the power semiconductor module (18) and the at least one electrical conductor (27) in the event of a short-circuit-like or short-circuit-induced current increase.

8. The power module according to one of the preceding claims, **characterized in that** the at least one housing part (32) is formed by a material, for example stainless steel, which has a higher ohmic resistance than the ohmic resistance of the material of the cooling plate (17), for example aluminum or an aluminum alloy.

9. The power module according to one of the preceding claims, **characterized in that** the distance (36, 36') and/or the alignment and/or the area-related overlap between the at least one electrical conductor (27) and the at least one housing part (32) is selected in such a way that, by means of the inductive coupling (M) between the at least one electrical conductor (27) through which a short-circuit current flows and the at least one housing part (32), electrical eddy currents are induced within the at least one housing part (32), which currents convert energy from the energy storage module (14) into heat by means of ohmic resistances in the at least one housing part (32).

10. The power module according to one of the preceding claims, **characterized in that** the electromagnetic coupling (M) of the at least one electric conductor (27) to which short-circuit current is applied is selected and defined such with respect to the housing circuit (35) formed from the at least one housing part (32) that in the event of a fault or short circuit, the inductance of the housing circuit (35) is transformed into the power circuit (33) in a transformer-like manner, so that a rate of current rise in the power circuit (33) in the event of a fault-related short-circuit-like current rise is reduced.

11. The power module according to one of the preceding claims, **characterized in that** the energy storage module (14) has an electrical capacitance which, in the event of a failure or fault in the at least one power semiconductor module (18) and in the absence or in the absence of effect of the short-circuit current attenuation (34) in the at least one electric conductor (27) causes a short-circuit current which is more than 100 times, in particular more than 500 times, a normal operating current in the at least one electric conductor (27).

12. A medium or high voltage converter (1) having a rack (2) in which a plurality of power modules arranged one above the other and/or one beside the other are accommodated and are electrically in series, **characterized in that** the power modules (4) are configured according to one or more of the preceding claims.

## Revendications

1. Sous-ensemble de puissance (4) pour un convertisseur à moyenne ou haute tension (1), de préférence modulaire, ou pour un convertisseur électronique de puissance d'un véhicule électrique, comprenant
- au moins un sous-ensemble semiconducteur de puissance (18), de préférence un sous-ensemble IGBT,
- au moins un sous-ensemble d'accumulation d'énergie (14),
- au moins un dispositif de refroidissement (16), ce sous-ensemble de refroidissement (16) étant conçu de préférence comme une plaque de refroidissement (17) traversée par un fluide de refroidissement,
- au moins une partie de boîtier (32) pour le recouvrement au moins partiel au moins du sous-ensemble semiconducteur de puissance (18),
**caractérisé en ce que**
l'au moins une partie de boîtier (32) est constituée d'un matériau électroconducteur, ou comprend, au moins dans la majeure partie de sa surface de limitation, un matériau électroconducteur,
le sous-ensemble de puissance (4) comprend au moins un conducteur électrique (27), constitué d'une barre conductrice (28, 28'), pour la transmission de l'énergie électrique entre l'au moins un sous-ensemble d'accumulation d'énergie (14) et l'au moins un sous-ensemble semiconducteur de puissance (18),
l'au moins un conducteur électrique (27) comprend une première et une deuxième barres conductrices (28, 28') qui sont juxtaposées ou superposées et qui sont isolées électriquement l'une par rapport à l'autre, ces première et deuxième barres conductrices (28, 28') étant conçues pour la conduction de courants opposés entre eux, de sorte que leurs champs magnétiques opposés se compensent au moins en grande partie,
et un amortisseur de courant de court-circuit (34) est prévu, dans lequel une distance (36, 36') et/ou une orientation et/ou un recouvrement de surface entre l'au moins un conducteur électrique (27) et l'au moins une partie de boîtier (32) est conçu de sorte que l'amortisseur de courant de court-circuit (34) n'est pas actif dans un état de fonctionnement normal du sous-ensemble de puissance ou du convertisseur modulaire et
lors de l'apparition d'une augmentation de courant, de type court-circuit ou provoqué par un court-circuit, dans l'au moins un conducteur électrique (27), un couplage inductif (M) peut être établi entre l'au moins un conducteur électrique (27) et l'au moins une partie de boîtier (32).

2. Sous-ensemble de puissance selon la revendication 1, **caractérisé en ce que** le couplage inductif (M) entre l'au moins un conducteur électrique (27) et l'au moins une partie de boîtier (32) est établi, dans le cas d'une augmentation de courant, de type court-circuit ou provoqué par un court-circuit, dans l'au moins un conducteur électrique (27), de sorte que plus de 20 %, de préférence plus de 40 % de l'énergie électrique du sous-ensemble d'accumulation d'énergie (14) peut être introduite dans l'au moins une partie de boîtier (32) ou une valeur maximale d'un courant de court-circuit dans l'au moins un conducteur électrique (27) est amortie de plus de 50 % par rapport à une conception sans l'amortisseur de courant de court-circuit (34).

3. Sous-ensemble de puissance selon la revendication 1 ou 2, **caractérisé en ce que** la distance (36, 36') et/ou l'orientation et/ou le recouvrement de surface entre l'au moins un conducteur électrique (27) et l'au moins une partie de boîtier (32) est conçu de sorte que, lors du fonctionnement normal du sous-ensemble de puissance (4), plus particulièrement sans l'apparition d'un courant de court-circuit provoqué par un défaut, une introduction inductive de la puissance du sous-ensemble d'accumulation d'énergie (14) vers l'au moins une partie de boîtier (32) représente moins de 2 % de la puissance qui est transmise au sous-ensemble semiconducteur de puissance (18) par l'intermédiaire de l'au moins un conducteur électrique (27).

4. Sous-ensemble de puissance selon l'une des revendications précédentes, **caractérisé en ce que** l'au moins une partie de boîtier (32) est reliée électriquement avec la plaque de refroidissement (17), plus particulièrement s'appuie, par l'intermédiaire de surfaces de contact électroconductrices, contre la plaque de refroidissement (17) électroconductrice, comprenant de préférence de l'aluminium.

5. Sous-ensemble de puissance selon l'une des revendications précédentes, **caractérisé en ce que** l'au moins une partie de boîtier (32) est conçue de préférence sous la forme d'un capot ou sous la forme d'un couvercle.

6. Sous-ensemble de puissance selon la revendication 4 ou 5, **caractérisé en ce que** l'au moins une partie de boîtier (32) est reliée électriquement, au niveau d'au moins deux portions d'extrémité opposées ou sur tous les côtés, avec la plaque de refroidissement (17) électroconductrice, de sorte qu'un circuit électrique de boîtier électroconducteur (35) comprenant la plaque de refroidissement (17) et l'au moins une partie de boîtier (32), est créé autour de l'au moins un conducteur électrique (27) et du sous-ensemble semiconducteur de puissance (18).

7. Sous-ensemble de puissance selon l'une des revendications 1 à 5, **caractérisé en ce que** l'au moins une partie de boîtier (32) forme, en combinaison avec au moins une autre partie de boîtier (25), lors d'une augmentation de courant de type court-circuit ou provoquée par un court-circuit, un circuit électrique de boîtier (35) couplé par transformateur autour du sous-ensemble semiconducteur de puissance (18) et de l'au moins un conducteur électrique (27).

8. Sous-ensemble de puissance selon l'une des revendications précédentes, **caractérisé en ce que** l'au moins une partie de boîtier (32) est constituée d'un matériau, par exemple un acier inoxydable, qui présente une résistance ohmique plus élevée que la résistance ohmique du matériau de la plaque de refroidissement (17), par exemple de l'aluminium ou un alliage d'aluminium.

9. Sous-ensemble de puissance selon l'une des revendications précédentes, **caractérisé en ce que** la distance (36, 36') et/ou l'orientation et/ou le recouvrement de surface entre l'au moins un conducteur électrique (27) et l'au moins une partie de boîtier (32) est choisie de sorte que, grâce au couplage inductif (M) entre l'au moins un conducteur électrique (27) traversé par un courant de court-circuit et l'au moins une partie de boîtier (32), des courants de Foucault sont induits à l'intérieur de l'au moins une partie de boîtier (32), qui convertissent l'énergie provenant du sous-ensemble d'accumulation d'énergie (14) en chaleur, au moyen des résistances ohmiques dans l'au moins une partie de boîtier (32).

10. Sous-ensemble de puissance selon l'une des revendications précédentes, **caractérisé en ce que** le couplage électromagnétique (M) de l'au moins un conducteur électrique (27) alimenté par un courant de court-circuit par rapport au circuit électrique de boîtier (35) constitué de l'au moins une partie de boîtier (32) est choisi et défini de sorte que, dans le cas d'un défaut ou d'un court-circuit, l'inductance du circuit électrique de boîtier (35) est transformé dans le circuit électrique de puissance (33) de sorte qu'une vitesse d'augmentation du courant dans le circuit électrique de puissance (33) est réduite lors d'une augmentation de courant de type court-circuit, provoquée par un défaut.

11. Sous-ensemble de puissance selon l'une des revendications précédentes, **caractérisé en ce que** le sous-ensemble d'accumulation d'énergie (14) présente une capacité électrique qui, lors d'une défaillance ou d'un défaut de l'au moins un sous-ensemble semiconducteur de puissance (18) et sans la présence ou sans l'action de l'amortisseur de courant de court-circuit (34) dans l'au moins un conducteur électrique (27), provoque un courant de court-circuit qui représente plus de 100 fois, plus particulièrement plus de 500 fois un courant de fonctionnement normal dans l'au moins un conducteur électrique (27).

12. Convertisseur à moyenne ou haute tension (1) avec un châssis (2) dans lequel une pluralité de sous-ensembles de puissance, superposés et/ou juxtaposés, sont logés et branchés électriquement en série, **caractérisé en ce que** les sous-ensembles de puissance (4) sont conçus selon l'une ou plusieurs des revendications précédentes.
